# EUROPEAN PATENT APPLICATION

(11) **EP 4 844 218 A2**
(43) Date of publication of application: **25.11.2026**
(21) Application number: 26179376.4
(22) Date of filing: 18.05.2026
(51) Int. Cl.: F02C 9/28, F02K 3/06

(54) **AIRCRAFT GAS TURBINE ENGINE AND CONTROL METHOD**

(30) Priority: 20.05.2025 US 202519213376
(71) Applicant: Pratt & Whitney Canada Corp., Longueuil, Québec J4G 1A1 (CA)
(72) Inventor: LABRECQUE, Michel, Sainte-Julie, J3E 3S1 (CA)
(74) Representative: Dehns

(57) **Abstract**

A gas turbine engine (14; 114) for propelling an aircraft (10) includes a combustor (28), a first spool, a second spool, a sensor operable to acquire a measured operating parameter of the gas turbine engine (14; 114), and an engine controller. The first measured operating parameter of the gas turbine engine (14; 114) is either: a rotational speed (N2) of the second spool; or a pressure (P3) of the compressed air between the compressor (26) and the combustor (28). The engine controller is operable to, without using another measured operating parameter of the turbofan engine (14; 114), determine one or more synthesized operating parameters (54) of the gas turbine engine (14; 114) based on the measured operating parameter of the gas turbine engine (14; 114), and control the gas turbine engine (14; 114) based on the one or more synthesized operating parameters.

## Description

### TECHNICAL FIELD

The invention relates generally to aircraft gas turbine engines, and more particularly to controlling aircraft gas turbine engines.

### BACKGROUND

Existing methods of controlling engines of passenger aircraft focus on safe and reliable engine operation over a relatively long lifespan of the aircraft engines. Existing control methods are sophisticated and include monitoring various engine functions during operation to achieve the control objectives. However, some aircraft applications may not require the complexity and cost of existing engine control methods.

### SUMMARY

In one aspect, the invention provides a gas turbine engine for propelling an aircraft. The gas turbine engine comprises: an air mover for propelling the aircraft; a combustor in which compressed air is mixed with fuel and ignited for generating a stream of combustion gas; a first turbine operable to extract energy from the combustion gas and drive the air mover; a spool separately rotatable from the air mover, the spool including a compressor stage operable to generate the compressed air for the combustor and a second turbine operable to extract energy from the combustion gas and drive the compressor stage; a sensor operable to acquire a first measured (e.g., directly measured) operating parameter (e.g., a sole measured operating parameter) of the gas turbine engine, the first measured operating parameter of the gas turbine engine being either: a rotational speed of the spool; or a pressure of the compressed air between the compressor stage and the combustor; and an engine controller operatively connected to the sensor, the engine controller being operable to, without using a second measured (e.g., a second directly measured) operating parameter of the gas turbine engine different from the first measured operating parameter of the gas turbine engine (e.g., using the first measured operating parameter as the sole measured or directly measured operating parameter of the gas turbine engine): determine one or more synthesized operating parameters of the gas turbine engine based on the first measured operating parameter of the gas turbine engine; and control the gas turbine engine based on the one or more synthesized operating parameters of the gas turbine engine.

In any of the aspects or embodiments described above or herein, the first measured operating parameter of the gas turbine engine may be the rotational speed of the spool.

In any of the aspects or embodiments described above or herein, the one or more synthesized operating parameters of the gas turbine engine may include a fuel flow delivered to the combustor.

In any of the aspects or embodiments described above or herein, the one or more synthesized operating parameters of the gas turbine engine may include a temperature of the combustion gas downstream of the combustor.

In any of the aspects or embodiments described above or herein, the one or more synthesized operating parameters of the gas turbine engine may include the pressure of the compressed air between the compressor and the combustor.

In any of the aspects or embodiments described above or herein, the gas turbine engine may be a turbofan engine.

In any of the aspects or embodiments described above or herein, the air mover may be a fan of a turbofan engine. The one or more synthesized operating parameters of the gas turbine engine may include a rotational speed of the fan.

In any of the aspects or embodiments described above or herein, controlling the gas turbine engine may include regulating a flow of bleed air extracted from a compressor including the compressor stage of the gas turbine engine based on a synthesized rotational speed of the fan.

In any of the aspects or embodiments described above or herein, the first measured operating parameter of the gas turbine engine may be the pressure of the compressed air between the compressor stage and the combustor.

In any of the aspects or embodiments described above or herein, the one or more synthesized operating parameters of the gas turbine engine may include the rotational speed of the spool.

In any of the aspects or embodiments described above or herein, controlling the gas turbine engine may include controlling a fuel flow delivered to the combustor.

In any of the aspects or embodiments described above or herein, the engine controller may be operatively connected to receive one or more operating parameters of the aircraft acquired remotely of the gas turbine engine. Determining the one or more synthesized operating parameters of the gas turbine engine may further be based on the one or more operating parameters of the aircraft.

In any of the aspects or embodiments described above or herein, the one or more operating parameters of the aircraft may include an outside air temperature.

In any of the aspects or embodiments described above or herein, the one or more operating parameters of the aircraft may include an altitude of the aircraft.

The one or more operating parameters of the aircraft may include: an ambient pressure surrounding the aircraft at a flight level of the aircraft; and/or an air speed of the aircraft.

In any of the aspects or embodiments described above or herein, the sensor may be a first sensor. The gas turbine engine may be devoid of a second or another sensor operable to acquire the second measured operating parameter for controlling the gas turbine engine.

Embodiments may include combinations of the above features.

In another aspect, the invention provides an unmanned aerial vehicle comprising: a wing operable to generate lift; and a turbofan engine operable to propel the unmanned aerial vehicle, the turbofan engine including: in serial flow communication: a fan through which ambient air is propelled; a compressor operable to generate compressed air; a combustor in which the compressed air is mixed with fuel and ignited to generate a stream of combustion gas; and a turbine for extracting energy from the combustion gas; a sensor operable to acquire one measured (e.g., directly measured) operating parameter (e.g., a sole measured operating parameter) of the turbofan engine, the one measured operating parameter of the turbofan engine being either: a rotational speed of the compressor; or a pressure of the compressed air between the compressor and the combustor; and an engine controller operatively connected to the sensor and operable to, without receiving any other measured operating parameter of the turbofan engine (e.g., using the one measured operating parameter as the sole (directly) measured operating parameter of the gas turbine engine), control a fuel flow delivered to the combustor of the turbofan engine based on the one measured operating parameter of the turbofan engine.

In any of the aspects or embodiments described above or herein, the engine controller may be operable to: determine one or more synthesized operating parameters of the turbofan engine based on the one measured operating parameter of the turbofan engine; and control the fuel flow delivered to the combustor of the turbofan engine based on the one or more synthesized operating parameters of the turbofan engine.

Embodiments may include combinations of the above features.

In a further aspect, the invention provides a method of controlling a gas turbine engine of an unmanned aerial vehicle, the gas turbine engine including: a combustor in which compressed air is mixed with fuel and ignited for generating a stream of combustion gas; a first spool mechanically driving an air mover for propelling the unmanned aerial vehicle, the first spool including a first turbine operable to extract energy from the combustion gas and drive the air mover; and a second spool separately rotatable from the air mover, the second spool including a compressor operable to generate the compressed air for the combustor and a second turbine operable to extract energy from the combustion gas and drive the compressor, the method comprising, at a controller of the gas turbine engine: receiving a sole measured (e.g., directly measured) operating parameter of the gas turbine engine, the sole measured operating parameter of the gas turbine engine being either: a rotational speed of the second spool; or a pressure of the compressed air between the compressor and the combustor; determining one or more synthesized operating parameters of the gas turbine engine based on the sole measured operating parameter of the gas turbine engine; generating one or more control signals based on the one or more synthesized operating parameters of the gas turbine engine; and controlling the gas turbine engine with the one or more control signals.

In any of the aspects or embodiments described above or herein, the gas turbine engine may be a turbofan engine.

In any of the aspects or embodiments described above or herein, the sole measured operating parameter of the turbofan engine may be the rotational speed of the second spool.

In any of the aspects or embodiments described above or herein, the method may include, at the controller, receiving one or more operating parameters of the unmanned aerial vehicle acquired remotely of the turbofan engine, determining the one or more synthesized operating parameters of the turbofan engine includes determining the one or more synthesized operating parameters of the turbofan engine based on the one or more operating parameters of the unmanned aerial vehicle.

In any of the aspects or embodiments described above or herein, the one or more synthesized operating parameters of the turbofan engine may include one or more of the following: a fuel flow delivered to the combustor; a temperature of the combustion gas downstream of the combustor; and/or a rotational speed of the first spool.

In any of the aspects or embodiments described above or herein, the one or more synthesized operating parameters may include a plurality of synthesized operating parameters.

In any of the aspects or embodiments described above or herein, the one or more control signals may include a plurality of control signals.

In any of the aspects or embodiments described above or herein, controlling the turbofan engine may include controlling the fuel flow delivered to the combustor and one or more other functions of the turbofan engine using the plurality of control signals.

Embodiments may include combinations of the above features.

Further details of these and other aspects of the subject matter of this disclosure will be apparent from the detailed description included below and the drawings.

### DESCRIPTION OF THE DRAWINGS

Certain exemplary embodiments will now be described in greater detail by way of example only and with reference to the accompanying drawings, in which:
FIG. 1 shows a perspective view of an exemplary unmanned aerial vehicle including one or more turbofan gas turbine engines as described herein;
FIG. 2 shows a schematic axial cross-section view of an exemplary turbofan gas turbine engine including a control system as described herein;
FIG. 3 shows a schematic axial cross-section view of another exemplary turbofan gas turbine engine including another control system as described herein;
FIG. 4A shows a schematic representation of an exemplary engine controller of the turbofan gas turbine engines of FIGS. 2 or 3;
FIG. 4B shows a schematic representation of an exemplary implementation of the engine controller of FIG. 4A;
FIG. 5 shows a flow diagram of a method of controlling a turbofan gas turbine engine;
FIG. 6 is a plot graphically illustrating an exemplary relationship for synthesizing a value of a fuel flow delivered to a combustor of the turbofan gas turbine engine based on a value of a rotational speed of a high-pressure spool of the turbofan gas turbine engine;
FIG. 7 is a plot graphically illustrating an exemplary relationship for synthesizing a value of an exhaust gas temperature of the turbofan gas turbine engine based on the value of the rotational speed of the high-pressure spool of the turbofan gas turbine engine;
FIG. 8 is a plot graphically illustrating an exemplary relationship for synthesizing a value of a pressure at an exit of a compressor of the turbofan gas turbine engine based on the value of the rotational speed of the high-pressure spool of the turbofan gas turbine engine; and
FIG. 9 is a plot graphically illustrating an exemplary relationship for synthesizing a value of a rotational speed of a fan of the turbofan gas turbine engine based on the value of the rotational speed of the high-pressure spool of the turbofan gas turbine engine.

### DETAILED DESCRIPTION

This disclosure describes gas turbine engines, unmanned aerial vehicles (UAVs) including such gas turbine engines, and associated methods of controlling gas turbine engines. In some embodiments, the gas turbine engines described herein may be used in aircraft applications that have less stringent (e.g., safety and/or durability) requirements. For examples, the gas turbine engines described herein may be used on unmanned aircraft such as UAVs (i.e., drones) that have a shorter lifespan (e.g., 100s of hours), require a lower durability, and/or that may be expendable. In such UAV applications, small thrust and/or other control uncertainties may not be critical and may not negatively affect the missions and/or shorten the intended lifespan of those gas turbine engines. Accordingly, the gas turbine engines and control methods described herein may have a simplified control architecture that promotes reduced number of components, reduced complexity, reduced weight and reduced cost, while still providing sound operability of the gas turbine engines suitable for the expected lifetime and utilization of the gas turbine engines.

In various embodiments, the gas turbine engines and associated control methods described herein may rely on a single (i.e., sole) measured (i.e., sensed) operating parameter of the gas turbine engines for controlling the (e.g., entire) operation of the gas turbine engines. The use of only one measured operating parameter of the gas turbine engine may eliminate the need of various sensors and associated wiring thereby reducing the complexity, cost and weight of the gas turbine engine.

In embodiments where control laws of the gas turbine engine require additional operating parameters of the gas turbine engine, such additional operating parameters may, instead of being measured, be synthesized based on (i.e., as a function of) the sole measured operating parameter of the gas turbine engine using suitable synthesizing relationships determined empirically or through simulation and/or modeling. In some embodiments, the synthesized operating parameters may be used in conventional control laws thereby eliminating or reducing the need for redesigning the control laws. While the synthesized operating parameters may be estimated values that may be less accurate than actual measured values in some situations, the use of the synthesized operating parameters may provide adequate control performance for UAVs and/or other applications having less stringent control requirements.

Aspects of various embodiments are described through reference to the drawings. The term "connected" may include both direct connection (in which two elements that are connected to each other contact each other) and indirect connection (in which at least one additional element is located between the two elements). The term "substantially" as used herein may be applied to modify any quantitative representation which could permissibly vary without resulting in a change in the basic function to which it is related. As used herein, the singular forms "a", "an", and "the" are intended to include the plural forms as well, unless the context clearly indicates otherwise.

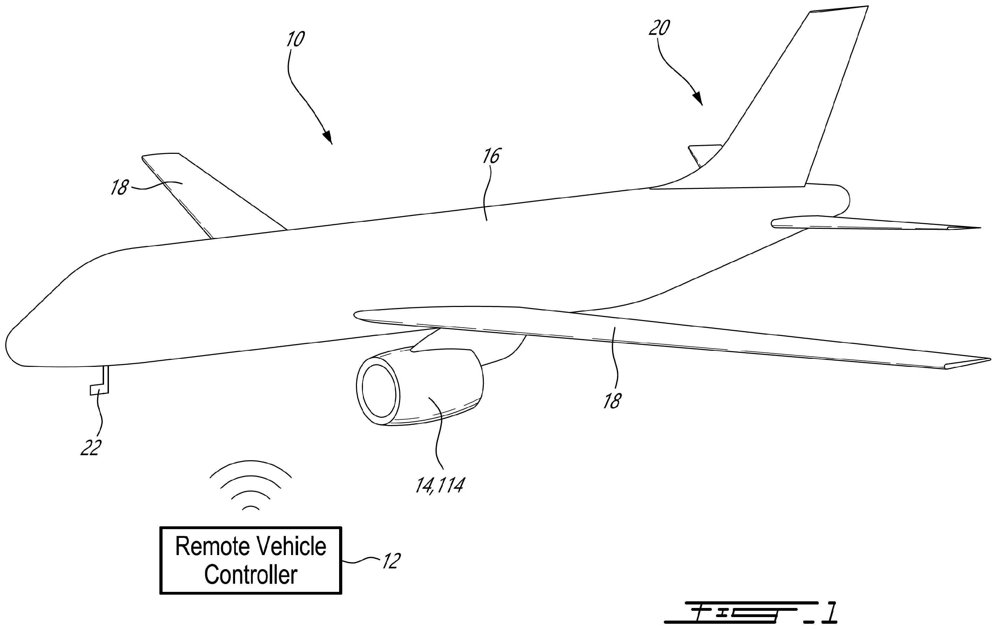

FIG. 1 schematically illustrates aircraft 10, which may be any type of manned or unmanned aircraft (i.e., UAV, drone) for which the gas turbine engines and associated control methods described herein may be appropriate. In embodiments where aircraft 10 is an UAV, aircraft 10 may be configured to fly without a human pilot and also without human passengers onboard. Accordingly, aircraft 10 may be controlled remotely or autonomously. In some embodiments, aircraft 10 may be an unmanned and remotely piloted vehicle that is controlled by a human operator remotely via optional remote vehicle controller 12, which may be located at a ground station, onboard a watercraft or onboard another aircraft for example. Remote vehicle controller 12 may be in wireless communication with control means onboard aircraft 10. In some embodiments, aircraft 10 may be an autonomous (i.e., self-piloted) UAV that can operate without real-time human input by following pre-programmed instructions. Aircraft 10 may carry cameras, sensors, communications equipment and/or other payloads.

In various embodiments, aircraft 10 may be a fixed-wing aircraft including one or more (e.g., two) thrust-generating (e.g., turbofan, turboprop, turbojet) gas turbine engines 14 (referred hereinafter as "engine 14") mounted thereto. Aircraft 10 may also include fuselage 16, wing(s) 18 respectively extending laterally relative to a longitudinal (i.e., forward-aft) orientation of fuselage 16, and empennage 20. Wing(s) 18 may be operable to generate lift. Aircraft 10 may include aerodynamic devices (e.g., movable flight control surfaces) that may be part of a flight control system of aircraft 10 and used to manipulate the attitude (pitch, roll, and yaw) of aircraft 10 and also control the speed and altitude of aircraft 10. One or more of engines 14 may be mounted to fuselage 16. Alternatively, or in addition, one or more of engines 14 may be mounted to wing(s) 18. One or more of engines 14 may be mounted outside or inside of fuselage 16.

Aircraft 10 may include one or more aircraft sensors 22 (only one being shown) that may be able to sense one or more operating parameters (e.g., states) of aircraft 10. Aircraft sensor(s) 22 may be disposed onboard of aircraft 10 but remotely of engine 14. In other words, aircraft sensor(s) 22 may be located outside a nacelle of engine 14 and may not be part of engine 14. For example, aircraft sensor(s) 22 may be mounted to fuselage 16 and exposed to an exterior of fuselage 16 for measuring a state of the ambient environment outside of fuselage 16. Instead or in addition, aircraft sensor(s) 22 may be disposed inside of fuselage 16.

Aircraft sensor(s) 22 is illustrated as an air data probe in FIG. 1 as an example. Aircraft sensor(s) 22 may be operable to measure various parameters of the surrounding ambient air outside of fuselage 16 such as temperature, pressure, and humidity, which may be used by a flight control system of aircraft 10 and/or by a controller of engine 14. Such air data probe may include one or more sensors for measuring one or more of dynamic pressure, static pressure, outside air temperature and humidity. Data acquired via the air data probe may be used to determine an airspeed of aircraft 10, an altitude of aircraft 10, an angle of attack of aircraft 10, and/or an angle of sideslip of aircraft 10. In some embodiments, aircraft sensor(s) 22 may include a pitot-static probe configured to measure both dynamic and static pressures for calculating the airspeed and the altitude of aircraft 10.

In some embodiments, aircraft sensor(s) 22 may include or be part of an inertial reference system including a gyroscope and/or an accelerometer to measure the motion of aircraft 10 and provide data on its position, velocity, attitude, and acceleration. In some embodiments, aircraft sensor(s) 22 may include or be part of a global positioning system (GPS) receiver that receives signals from GPS satellites to determine the position and/or velocity of aircraft 10.

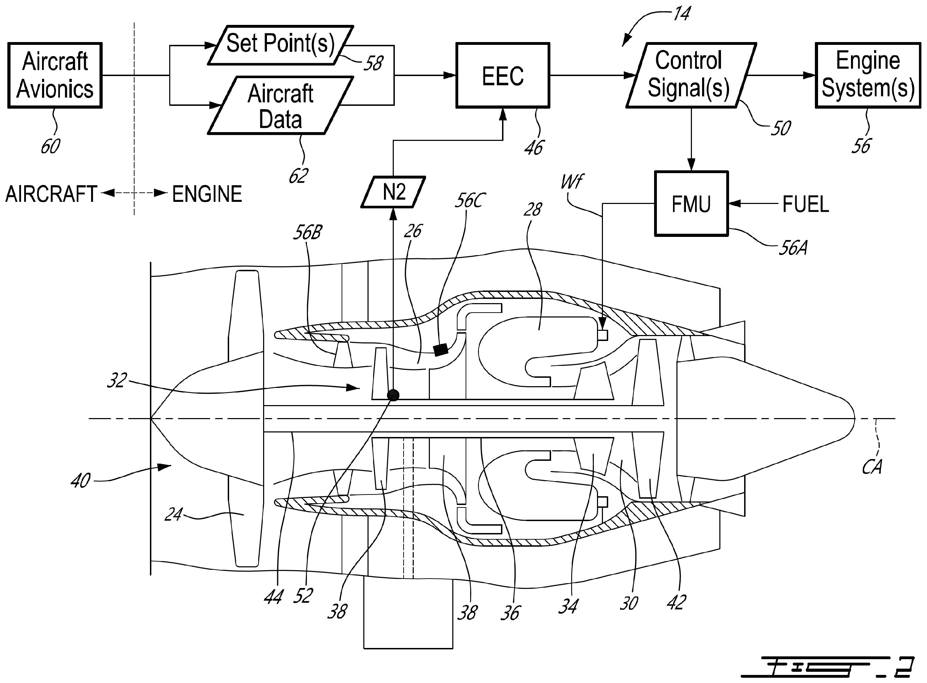

FIG. 2 shows a schematic axial cross-section view of an exemplary engine 14, which may be a turbofan gas turbine engine and which may include a simplified control system as described herein. Engine 14 may be operable to propel aircraft 10. Engine 14 may be of a type preferably provided for use in subsonic flight, generally comprising, in serial flow communication, fan 24 (i.e., air mover) through which ambient air is propelled, multistage compressor 26 for pressurizing the air, combustor 28 in which the compressed air is mixed with fuel and ignited for generating an annular stream of hot combustion gas, and turbine section 30 for extracting energy from the combustion gas. Even though a turbofan gas turbine engine is illustrated and described herein as an example, it is understood that the control systems and methods described herein can also be integrated into other types of gas turbine engines such as turboprop engines and turbojet engines for example. Engine 14 may drive a suitable air mover (e.g., fan 24, propeller, other bladed rotor) for propelling aircraft 10.

In some embodiments, engine 14 may be a single-spool or a multi-spool (e.g., dual-spool, three-spool) gas turbine engine. In a dual-spool embodiment, engine 14 may include high-pressure spool 32 (referred hereinafter as "HP spool 32") including one or more high-pressure turbine disks 34 (referred hereinafter in the singular as "HP turbine disk 34") of the turbine section 30, high-pressure shaft 36 (referred hereinafter as "HP shaft 36") and one or more high-pressure compressor stages 38 (referred hereinafter in the singular as "HP compressor stage 38" of compressor 26. HP compressor stage 38 may include a bladed rotor configured as an axial compressor stage and/or a radial (i.e., centrifugal) compressor stage, both of which being illustrated in FIG. 2. HP turbine disk 34 and HP compressor stage 38 may be mounted to HP shaft 36 for common rotation therewith. HP turbine disk 34 may drive the rotation of HP spool 32. HP spool 32 may also be referred to as a gas generator.

Engine 14 may include low-pressure spool 40 (referred hereinafter as "LP spool 40") that is separately rotatable from HP spool 32. In other words, HP spool 32 and LP spool 40 may be mechanically disconnected from each other to permit one spool to freely rotate relative to the other. LP spool 40 may include one or more low-pressure turbine disks 42 (referred hereinafter in the singular as "LP turbine disk 42"), low-pressure shaft 44 (referred hereinafter as "LP shaft 44"), optionally one or more stages of compressor 26, and optionally fan 24. LP turbine disk 42 may extract energy from the combustion gas downstream of combustor 28 and mechanically drive fan 24. HP spool 32 may be separately rotatable from fan 24 and may not be mechanically connected to fan 24. In some embodiments, fan 24 may be part of LP spool 40. For example, fan 24 and LP turbine disk 42 may be mounted directly to LP shaft 44 for common rotation therewith. Alternatively, fan 24 may be drivingly connected to (i.e., torque-transmitting engagement with) LP shaft 44 via a (e.g., speed-reducing) gearbox (not show) and rotate at a different (e.g., lower) speed than LP shaft 44. In other words, engine 14 may be a geared turbofan gas turbine engine in which fan 24 is mechanically driven by LP shaft 44 via a gearbox.

HP shaft 36 and LP shaft 44 may be arranged coaxially within engine 14 and both be rotatable about central axis CA. HP shaft 36 may be hollow to permit the passage of LP shaft 44 therethrough. LP turbine disk 42 may be disposed downstream of HP turbine disk 34 relative to the gas path conveying combustion gas from combustor 28 through turbine section 30.

Engine 14 may include an engine controller referenced herein as electronic engine controller 46 (referenced hereinafter as "EEC 46"). EEC 46 may be a digital computer that is part of a full authority digital engine control (FADEC) of engine 14. EEC 46 may function as the "brain" of engine 14 by managing and optimizing one or more aspects of engine performance such as fuel flow delivered to combustor 28, thrust, and/or engine health. EEC 46 may ensure that engine 14 operates at a desirable (e.g., peak) efficiency and within safe parameters for different flight conditions by implementing suitable limiting logic.

EEC 46 may be configured to carry out a simplified control of engine 14 that relies on a sole measured operating parameter of engine 14 and that uses one or more synthesized operating parameters as needed. In the example shown in FIG. 2, the sole measured operating parameter of engine 14 is a rotational speed N2 of HP spool 32 including HP turbine disk 34, HP shaft 36 and HP compressor stage 38. Other operating parameters may be synthesized as needed based on rotational speed N2 and used by EEC 46 to generate one or more control signals 50 that may then be used to control one or more functions of engine 14. Rotational speed N2 of HP spool 32 may also be referred to as a "core mechanical speed" of engine 14.

EEC 46 may be operatively connected to speed sensor 52 that is installed and operable to acquire rotational speed N2 of HP spool 32, which may be expressed in revolutions per minute (RPM) for example. Speed sensor 52 may be configured to rely on magnetic, optical, or electromechanical principles to measure rotational speed N2 of HP shaft 36. In various embodiments, speed sensor 52 may be a Hall effect sensor, a variable reluctance sensor, or an encoder for example. In some embodiments, engine 14 may include two or more speed sensors 52 to acquire rotational speed N2 of HP shaft 36 in a redundant manner and provide independent measurements of the same rotational speed N2 as different inputs on different channels of EEC 46. In some embodiments, engine 14 may include a sole speed sensor 52 having a sole pick-up feature to acquire rotational speed N2 but two separate (i.e., redundant) communication paths providing two separate measurement signals to EEC 46. Alternatively, engine 14 may include a sole speed sensor 52 to acquire rotational speed N2 and a sole measurement of rotational speed N2 may be provided on a sole channel of EEC 46.

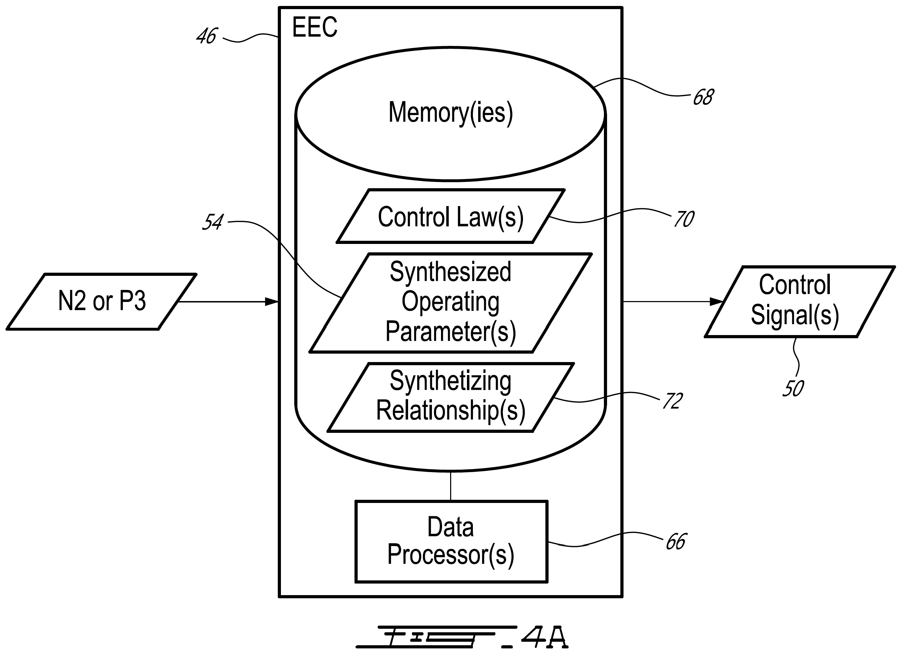

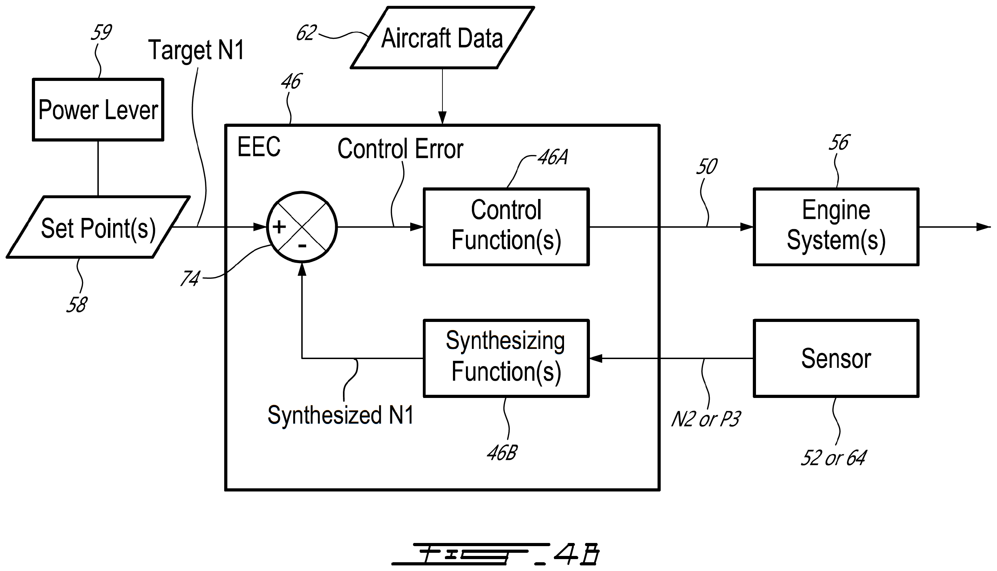

EEC 46 may be operable to, without using any other measured (i.e., sensed) operating parameters of engine 14 different from rotational speed N2, determine one or more synthesized operating parameters 54 (shown in FIG. 4) of engine 14 based on rotational speed N2 of HP shaft 36. In other words, EEC 46 may not be connected to receive any measured operating parameters of engine 14 other than rotational speed N2. EEC 46 may not be operatively connected to any sensors of engine 14 other than to one or more speed sensors 52 operable to acquire rotational speed N2. Using synthesized operating parameter(s) 54, EEC 46 may generate control signal(s) 50 for controlling one or more (e.g., all) functions of engine 14. For example, EEC 46 may be operatively connected to one or more engine systems 56 that carry out respective functions of engine 14.

EEC 46 may control the overall operation (e.g., a plurality or all of functions) of engine 14 based on rotational speed N2 of HP shaft 36 and no other measured operating parameters of engine 14. In other words, rotational speed N2 of HP shaft 36 may be the only (i.e., sole) measured operating parameter of engine 14 that is measured by a sensor of engine 14 and used to control engine 14. For example, EEC 46 may not receive any feedback from any sensors of engine 14 other than speed sensor(s) 52. EEC 46 may only receive one measured operating parameter of engine 14. EEC 46 may not receive any measured operating parameters of engine 14 other than rotational speed N2 of HP shaft 36. EEC 46 may be devoid of any connections to sensors of engine 14 other than to speed sensor(s) 52. In a dual-channel embodiment of EEC 46, two speed sensors 52 may be the only sensors part of engine 14. In a single-channel embodiment of EEC 46, a sole speed sensor 52 may be the sole sensor part of engine 14.

In some embodiments, engine 14 may be devoid of sensors other than speed sensor(s) 52 for the purpose of controlling engine 14. For example, engine 14 may be devoid of a rotational speed sensor operable to measure a rotational speed of fan 24, sometimes referred to as a "N1 sensor". Engine 14 may be devoid of a pressure sensor operable to measure a (e.g., static or total) pressure of the compressed air between compressor 26 and combustor 28, sometimes referred to as a "P3 sensor".

In some embodiments, engine 14 may include one or more advisory sensors for monitoring parameters for advisory purpose(s) only (e.g., in embodiments where aircraft 10 is remotely piloted) but not for actively controlling engine 14. Such advisory type of sensors may, for example, include an oil temperature sensor of a lubrication system of engine 14, an oil pressure sensor of the lubrication system, an oil level sensor of the lubrication system, a chip detector of the lubrication system, an oil filter blockage sensor of the lubrication system, and/or a fuel filter blockage sensor of the fuel system.

While controlling the overall (e.g., complete) operation of engine 14, EEC 46 may control individual functions of respective engine systems 56 of engine 14 based on only one (i.e., sole) measured operating parameter of engine 14. As one example, EEC 46 may be operatively connected to fuel metering unit 56A (referred hereinafter as "FMU 56A"), which may be operable to regulate fuel flow Wf delivered to combustor 28. As another example, EEC 46 may be operatively connected to one or more variable-orientation guide vanes 56B, which may be operable to regulate the angle of the airflow entering a stage of compressor 26. As another example, EEC 46 may be operatively connected to one or more bleed-off valves 56C, which may be operable to regulate a flow of compressed air, known as "bleed air", extracted from compressor 26. The control of bleed-off valve(s) 56C may permit a pressure inside the gas path (e.g., including compressor 26) of the core of engine 14. As another example of an engine system 56, EEC 46 may be operatively connected to a variable area nozzle of engine 14, which may be operable to control the performance of engine 14 across different flight conditions.

The control of engine 14 may be performed by EEC 46 based on one or more operational set points 58 (referred hereinafter in the singular) that is communicated to EEC 46 from aircraft avionics 60 that are disposed onboard of aircraft 10 but outside of engine 14. Aircraft avionics 60 may be disposed inside of fuselage 16 for example. Aircraft avionics 60 may include a flight management system (FMS) of aircraft 10, which may include an on-board multi-purpose navigation, performance, and/or aircraft operations computer configured to automate some flight tasks and manage the navigation of aircraft 10.

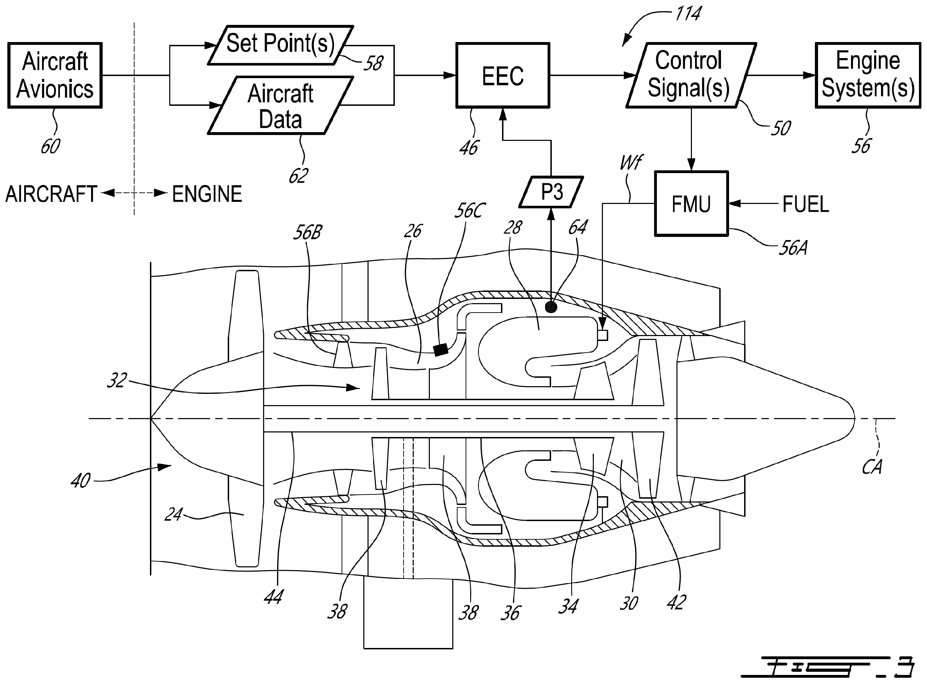

Set point 58 may be a desired or target operating parameter of engine 14 and may include a value of a specific power output of engine 14, pressure P3 (shown in FIG. 3), a value of a thrust output from engine 14, and/or a value of a rotational speed (e.g., RPM) of a rotor of engine 14 such as a rotational speed N2 of HP spool 32, a rotational speed of LP spool 40 and/or a rotational speed N1 of fan 24 for example. Set point 58 may be generated by or derived from a remote pilot's input (e.g., power lever position) acquired via remote vehicle controller 12 and that is translated into set point 58 for the desired power or thrust desired from engine 14. Set point 58 may vary as a function of a phase of flight of aircraft 10 for example, or as a function of the type of maneuvers performed by aircraft 10.

Set point 58 may be used as a reference for EEC 46 to regulate and maintain the performance of engine 14. In various situations, EEC 46 may control the flow of fuel to combustor 28 via FMU 56A to achieve and substantially maintain set point 58. EEC 46 may rely on rotational speed N2 of HP shaft 36, aircraft data 62 and/or one or more synthesized operating parameters 54 to monitor an error between set point 58 and the actual operating level of engine 14, and adjust fuel flow Wf delivered to combustor 28 via FMU 56A to reduce such error.

EEC 46 may also control other functions and systems of engine 14 such as variable-orientation guide vane(s) 56B and bleed-off valve(s) 56C to provide a sound and stable operation of engine 14. For example, EEC 46 may control engine 14 to prevent an unstable (e.g., surge) condition of compressor 26. EEC 46 may control engine 14 to prevent or recover from a flameout condition. EEC 46 may control engine 14 to prevent an over-temperature condition.

EEC 46 may be operatively connected to receive aircraft data 62, which may include one or more measured, computed and/or commanded operating parameters of aircraft 10 acquired remotely of engine 14. Such measured operating parameters may be acquired via aircraft sensor(s) 22 onboard of aircraft 10 and outside of engine 14. Alternatively or in addition, aircraft data 62 may include one or more operating parameters of aircraft 10 that are derived (i.e., calculated) based on measurements acquired via aircraft sensor(s) 22. Aircraft data 62 may be provided by aircraft avionics 60 and may originate (i.e., be determined or measured) outside of engine 14. Aircraft data 62 may originate from pilot input via suitable user interface elements such as buttons, switches and power lever 59 for example. EEC 46 may be operable to determine some synthesized operating parameter(s) 54 of engine 14 based only on rotational speed N2. EEC 46 may be operable to determine some synthesized operating parameter(s) 54 of engine 14 based on rotational speed N2 and on aircraft data 62.

FIG. 3 shows a schematic axial cross-section view of an exemplary engine 114, which may be a turbofan gas turbine engine and which may include a simplified control system as described herein. Engine 114 may be operable to propel aircraft 10. Engine 114 may include elements of engine 14 described above and like elements are identified using like reference numerals. For the sake of conciseness, description of like elements is not repeated.

EEC 46 may be configured to carry out a simplified control of engine 114 that relies on a sole measured operating parameter of engine 114 and that uses one or more synthesized operating parameters 54 of engine 114 as needed. In some embodiments, engine 114 may include one or more advisory sensors for monitoring parameters for advisory purpose(s) only but not used to actively control engine 114. In contrast with engine 14 of FIG. 2, the sole measured operating parameter of engine 114 may be a pressure P3 of the compressed air discharged from compressor 26 (i.e., between compressor 26 and combustor 28). Other operating parameters may be synthesized as needed based on pressure P3 and optionally based on aircraft data 62, and used by EEC 46 to generate one or more control signals 50 that may then be used to control one or more functions of engine 114.

EEC 46 may be operatively connected to pressure sensor 64 that is installed and operable to acquire pressure P3 at the exit of compressor 26. Alternatively, pressure sensor 64 may be installed and operable to acquire a pressure at an intermediate location within compressor 26. Pressure sensor 64 may be configured to rely on piezoelectric, capacitive, and/or piezoresistive technologies to measure pressure P3 of the compressed air. In some embodiments, engine 114 may include two or more pressure sensors 64 to acquire pressure P3 in a redundant manner and provide independent measurements of the same pressure P3 as different inputs on different channels of EEC 46. In some embodiments, engine 14 may include a sole pressure sensor 64 having a sole pick-up feature to acquire pressure P3 but two separate (i.e., redundant) communication paths providing two separate measurement signals to EEC 46. Alternatively, engine 114 may include a sole pressure sensor 64 to acquire pressure P3 and a sole measurement of pressure P3 may be provided on a sole channel of EEC 46.

EEC 46 may be operable to, without using any other measured (i.e., sensed) operating parameters of engine 114, determine one or more synthesized operating parameters 54 (shown in FIG. 4) of engine 114 based on pressure P3. In other words, EEC 46 may not be connected to receive any other measured operating parameters of engine 114. EEC 46 may not be operatively connected to any sensors of engine 114 other than one or more pressure sensors 64 operable to acquire pressure P3. Using synthesized operating parameter(s) 54, EEC 46 may generate control signal(s) 50 for controlling one or more (e.g., all) functions of engine 114. For example, EEC 46 may be operatively connected to one or more engine systems 56 that carry out respective functions of engine 114.

EEC 46 may control the overall operation (e.g., a plurality or all of functions) of engine 114 based on pressure P3 and no other measured operating parameters of engine 114. In other words, pressure P3 may be the only (i.e., sole) measured operating parameter of engine 114 that is measured by a sensor of engine 114 and used to control engine 114. For example, EEC 46 may not receive any feedback from any sensors of engine 114 other than pressure sensor(s) 64. EEC 46 may only receive one measured operating parameter of engine 114. EEC 46 may not receive any measured operating parameters of engine 114 other than pressure P3. EEC 46 may be devoid of any connections to sensors of engine 114 other than to pressure sensor(s) 64. In a dual-channel embodiment of EEC 46, two pressure sensors 64 may be the only sensors part of engine 114. In a single-channel embodiment of EEC 46, a sole pressure sensor 64 may be the sole sensor part of engine 114.

In some embodiments, engine 114 may be devoid of sensors other than pressure sensor(s) 64. For example, engine 114 may be devoid of a rotational speed sensor operable to measure rotational speed N1 of fan 24. Engine 114 may be devoid of a rotational speed sensor operable to measure rotational speed N2 of HP spool 32.

While controlling the overall (e.g., complete) operation of engine 114, EEC 46 may control individual functions of respective engine systems 56 of engine 114. As one example, EEC 46 may be operatively connected to FMU 56A, which may be operable to regulate fuel flow Wf delivered to combustor 28. As another example, EEC 46 may be operatively connected to one or more variable-orientation guide vanes 56B, which may be operable to regulate the angle of the airflow entering a stage of compressor 26. As a further example, EEC 46 may be operatively connected to one or more bleed-off valves 56C, which may be operable to regulate a flow of compressed air extracted from compressor 26.

The control of engine 114 may be performed by EEC 46 based on set point 58 that is communicated to EEC 46 from aircraft avionics 60. Set point 58 may be a desired or target operating parameter of engine 114 and may include a value of a specific power output of engine 114, pressure P3, a value of a thrust output from engine 114, and/or a value of a rotational speed (e.g., RPM) of a rotor of engine 114 such as HP spool 32, LP spool 40 and/or fan 24 for example. Set point 58 may be used as a reference for EEC 46 to regulate and maintain the performance of engine 114. In various situations, EEC 46 may control the flow of fuel to combustor 28 via FMU 56A to achieve and substantially maintain set point 58. EEC 46 may rely on pressure P3, aircraft data 62 and/or one or more synthesized operating parameters 54 to monitor an error between set point 58 and the actual operating level of engine 114, and adjust fuel flow Wf delivered to combustor 28 via FMU 56A to reduce such error.

EEC 46 may also control other functions and systems of engine 114 such as variable-orientation guide vane(s) 56B and bleed-off valve(s) 56C to provide a sound and stable operation of engine 114. For example, EEC 46 may control engine 114 to prevent an unstable (e.g., surge) condition of compressor 26. EEC 46 may control engine 114 to prevent or recover from a flameout condition. EEC 46 may control engine 114 to prevent an over-temperature condition.

EEC 46 may be operatively connected to receive aircraft data 62. EEC 46 may determine some synthesized operating parameter(s) 54 of engine 14 based only on pressure P3. EEC 46 may determine some synthesized operating parameter(s) 54 of engine 14 based on pressure P3 and on aircraft data 62.

FIG. 4A shows a schematic representation of EEC 46. EEC 46 may include one or more data processors 66 (referred hereinafter in the singular as "processor 66") and non-transitory machine-readable memory(ies) 68 (referred hereinafter in the singular). EEC 46 may be configured to generate control signal(s) 50 for controlling one or more engine system(s) 56. EEC 46 may optionally also perform other tasks. EEC 46 may perform one or more procedures or steps defined by machine-readable instructions (e.g., software, program code) including control laws 70 and synthesizing relationships 72 stored in memory 68 and executable by processor(s) 66 to generate control signal(s) 50.

Processor(s) 66 may include any suitable device(s) configured to cause a series of steps to be performed by EEC 46 so as to implement a computer-implemented process such that instructions, when executed by EEC 46 or other programmable apparatus, may cause the functions/acts specified in the methods described herein to be executed. Processor(s) 66 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 68 may include any suitable machine-readable storage medium. Memory 68 may include non-transitory computer-readable storage medium such as, for example, but not limited to, an electronic, magnetic, optical, electromagnetic, infrared, or semiconductor system, apparatus, or device, or any suitable combination of the foregoing. Memory 68 may include any storage means (e.g., devices) suitable for retrievably storing machine-readable instructions executable by processor(s) 66.

Memory 68 may store one or more predetermined synthesizing relationships 72 that may be used to generate synthesized operating parameters 54 based on rotational speed N2 or on pressure P3.

Memory 68 may store one or more control laws 70 that may rely on rotational speed N2 or on pressure P3 to generate control signal(s) 50. Instead or in addition, control laws 70 may rely on synthesized operating parameters 54 (e.g., derived from rotational speed N2 or from pressure P3) and/or on aircraft data 62 to generate control signal(s) 50.

FIG. 4B shows another schematic representation of an exemplary implementation of EEC 46 for controlling one or more engine system(s) 56 based on a target rotational speed N1 of fan 24 and a synthesized rotational speed N1 of fan 24 based on a sole measured operating parameter, which may be the rotational speed N2 of HP spool 32 or pressure P3. EEC 46 may implement synthesizing function(s) 46B that determines one or more synthesized operating parameters 54 such as the synthesized rotational speed N1 of fan 24 based on synthesizing relationship(s) 72. At summing junction 74, the synthesized rotational speed N1 of fan 24 may be subtracted from the target rotational speed N1 of fan 24 to determine a control error, which is then used by control function(s) 46A (e.g., including control law(s) 70) to generate control signal(s) 50 for controlling engine system(s) 56 (e.g., FMU 56A). Control function(s) 46A and/or synthesizing function(s) 46B may make use of aircraft data 62. Target N1 may be derived from a position (e.g., angle) of power lever 59 and optionally also from other aircraft data 62 and may be expressed as target N1 = f(position of power lever 59, aircraft data 62). The position of power lever 59 may be indicative of a desired power output from engine 14. Power lever 59 may be part of remote vehicle controller 12 (shown in FIG. 1). Synthesized N1 may be derived from rotational speed N2 of HP spool 32 or pressure P3 and optionally also as a function of other aircraft data 62 and may be expressed as synthesized N1 = f(N2, aircraft data 62) or f(P3, aircraft data 62).

Various aspects of the present disclosure may be embodied as systems, devices, methods and/or computer program products. Accordingly, aspects of the present disclosure may take the form of an entirely hardware embodiment, an entirely software embodiment or an embodiment combining software and hardware aspects. Furthermore, aspects of the present disclosure may take the form of a computer program product embodied in one or more non-transitory computer readable medium(ia) (e.g., memory 68) having computer readable program code (e.g., control laws 70, synthesizing relationships 72) embodied thereon.

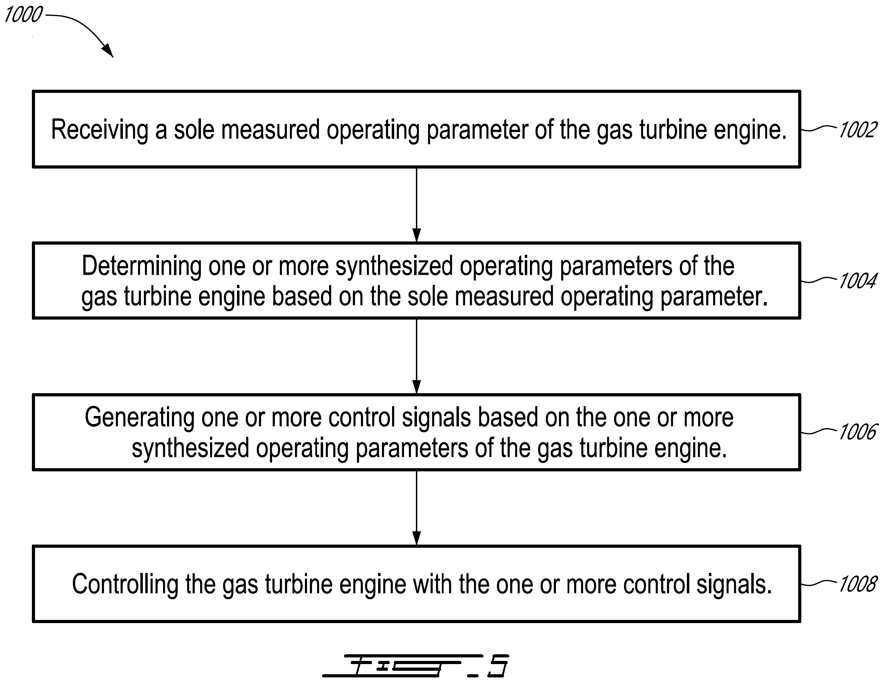

FIG. 5 is a flow diagram of an exemplary method 1000 of controlling engine 14, 114 of aircraft 10, which may be an UAV. Method 1000 may be performed using engines 14, 114 or another turbofan gas turbine engine. Method 1000 may include elements of engines 14, 114. Method 1000 may be executed at least in part by EEC 46. Method 1000 may include other actions including other actions disclosed herein. In various embodiments, method 1000 may include:
receiving a sole measured operating parameter of engine 14, 114, the sole measured operating parameter of engine 14, 114 being either: rotational speed N2 of HP spool 32; or pressure P3 of the compressed air between compressor 26 and combustor 28 (block 1002);
determining one or more synthesized operating parameters 54 of engine 14, 114 based on the sole measured operating parameter of engine 14, 114 (block 1004);
generating one or more control signals 50 based on the one or more synthesized operating parameters 54 of engine 14, 114 (block 1006); and
controlling engine 14, 114 with the one or more control signals 50 (block 1008).

Controlling engine 14, 114 may include controlling one or more (e.g., all) functions of engine 14, 114 based on the sole measured operating parameter of engine 14, 114. Controlling engine 14, 114 may include adjusting fuel flow Wf delivered to combustor 28. Controlling engine 14, 114 may include adjusting variable-orientation guide vane(s) 56B and/or bleed-off valve(s) 56C of engine 14, 114.

In some embodiments, method 1000 may include, at EEC 46, receiving aircraft data 62 including one or more (e.g., measured or determined) operating parameters of aircraft 10 acquired remotely of engine 14, 114. Determining synthesized operating parameter(s) 54 may include determining synthesized operating parameter(s) 54 based on the one or more operating parameters in aircraft data 62. In various embodiments, aircraft data 62 may include an outside air temperature; an altitude of aircraft 10, an ambient pressure surrounding aircraft 10 at a flight level of aircraft 10, and an airspeed of aircraft 10.

In some embodiments of method 1000, the one or more synthesized operating parameters 54 of engine 14, 114 may include one or more of the following: fuel flow Wf delivered to combustor 28; a temperature of the combustion gas downstream of combustor 28 (e.g., exhaust gas temperature); a temperature of the air entering engine 14, 114; a temperature of the air within compressor 26; a torque applied to HP shaft 36, a torque applied to LP shaft 44; and/or rotational speed N1 of fan 24. In some embodiments of method 1000, the one or more synthesized operating parameters 54 may include a plurality of synthesized operating parameters 54. In some embodiments of method 1000, the one or more control signals 50 may include a plurality of control signals 50.

One or more synthesized operating parameters 54 may be used in conventional logic defined by control laws 70 thereby permitting simplification of engine 14, 114 through the omission of sensors while eliminating or reducing the need for software development costs associated with redesigning the control laws 70. In other words, synthesized operating parameters 54 may be used to replace sensed values that would normally be required by control laws 70. In some embodiments, the use of synthesized operating parameters 54 may facilitate relatively low computational complexity within EEC 46.

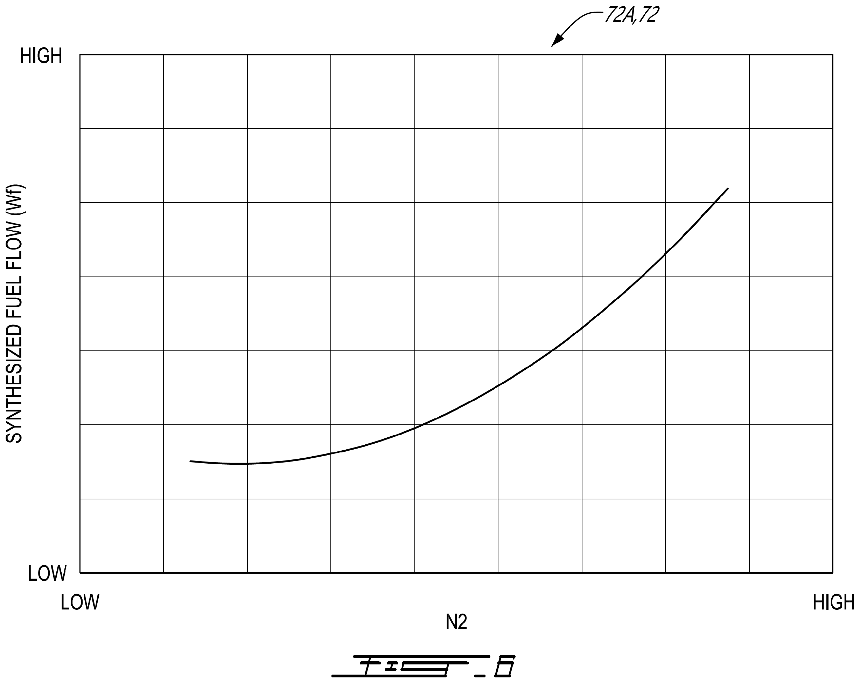

FIGS. 6-9 are plots graphically illustrating exemplary synthesizing relationships 72A-72D respectively for computing synthesized operating parameter(s) 54 based on rotational speed N2 of HP spool 32, and optionally on other information available to EEC 46. FIGS. 6-9 are provided as examples only and other synthesizing relationship(s) 72 may be incorporated into engine 14, 114 and method 1000 described herein. For example, synthesizing relationship(s) 72 for computing synthesized operating parameter(s) 54 based on pressure P3 instead of rotational speed N2 may be used. Synthesizing relationship(s) 72 may be stored in memory 68 of EEC 46 in the form of equations and/or numerical look-up tables (i.e. schedules) for example. Synthesizing relationships 72 may be determined empirically using measurements or through simulation and/or modeling of engine 14.

FIG. 6 is a plot graphically illustrating exemplary relationship 72A for synthesizing a value of fuel flow Wf (shown in FIG. 2) delivered to combustor 28 of engine 14 based on rotational speed N2 of HP spool 32 of engine 14. In some embodiments, exemplary relationship 72A may also consider aircraft data 62 as well. For example, fuel flow Wf may be expressed as Wf = f(N2, OAT, Pamb, etc.) where N2 is the rotational speed of HP spool 32, OAT is the outside air temperature included in aircraft data 62, and Pamb is an atmospheric pressure outside of aircraft 10 that is included in aircraft data 62. In some embodiments, fuel flow Wf may optionally be synthesized as a function of other data.

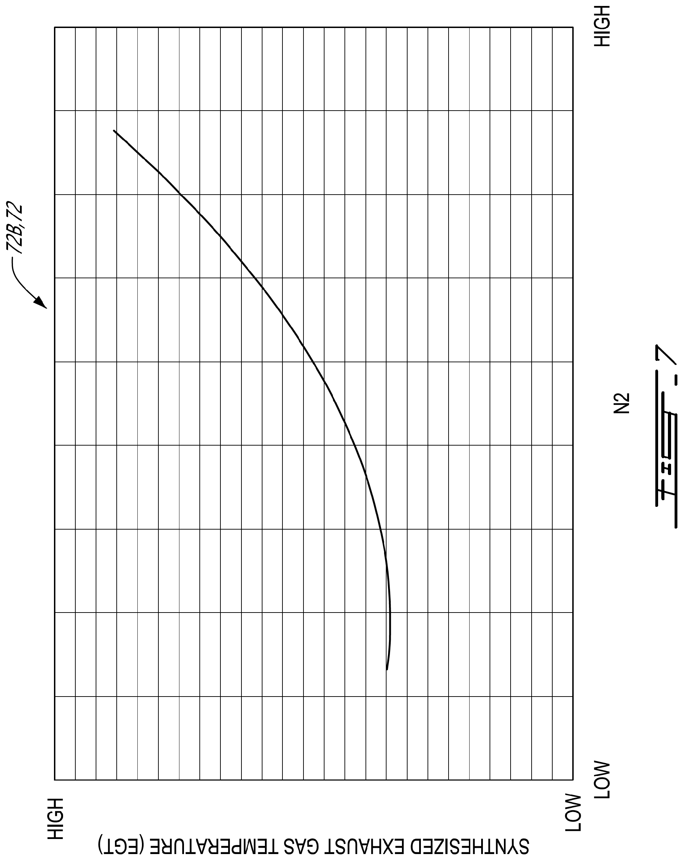

FIG. 7 is a plot graphically illustrating an exemplary relationship 72B for synthesizing an operating temperature of engine 14 such as a value of exhaust gas temperature (EGT) of engine 14 based on rotational speed N2 of HP spool 32 of engine 14 for example. The exhaust gas temperature may be a temperature of the combustion gas downstream of combustor 28 and of turbine section 30. In some embodiments, exemplary relationship 72B may also consider aircraft data 62 as well. For example, the exhaust gas temperature may be expressed as EGT = f(N2, OAT, Pamb, etc.) where N2 is the rotational speed of HP spool 32, OAT is the outside air temperature included in aircraft data 62, and Pamb is the atmospheric pressure outside of aircraft 10 that is included in aircraft data 62. In some embodiments, the EGT may optionally be synthesized as a function of other data. The synthesized EGT may be used in limiting logic implemented by EEC 46.

Instead or in addition to synthesizing the EGT, the operating temperature of engine 14 may be characterized by an inter-turbine temperature (ITT) which may be synthesized and used by EEC 46 for generating control signal(s) 50. The inter-turbine temperature may be a temperature in the gas path between two turbine stages of turbine section 30 (e.g., between HP turbine 34 and LP turbine 42). The inter-turbine temperature may be expressed as ITT = f(N2, OAT, Pamb, etc.). The synthesized ITT may be used in limiting logic implemented by EEC 46.

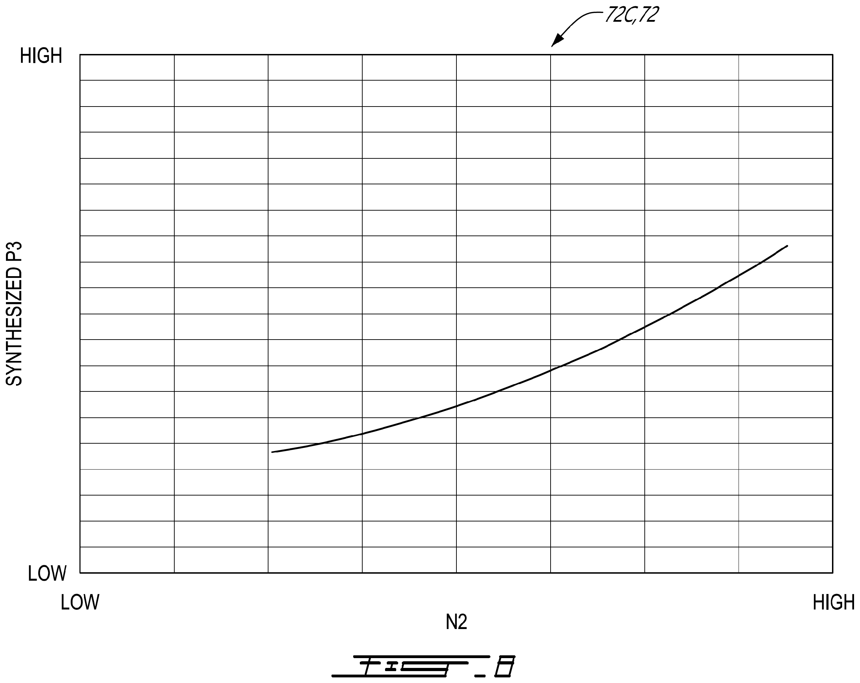

FIG. 8 is a plot graphically illustrating an exemplary relationship 72C for synthesizing a value of pressure P3 at an exit of compressor 26 of engine 14 based on rotational speed N2 of HP spool 32 of engine 14. Pressure P3 may be the pressure of the compressed air between compressor 26 and combustor 28. In some embodiments, exemplary relationship 72C may also consider aircraft data 62 as well. For example, pressure P3 may be expressed as P3 = f(N2, OAT, Pamb, etc.) where N2 is the rotational speed of HP spool 32, OAT is the outside air temperature included in aircraft data 62, and Pamb is the atmospheric pressure outside of aircraft 10 that is included in aircraft data 62. In some embodiments, pressure P3 may optionally be synthesized as a function of other data.

In embodiments where pressure P3 is the sole measured operating parameter of engine 114, relationship 72C may be used to synthesize rotational speed N2 of HP spool 32 based on pressure P3 instead.

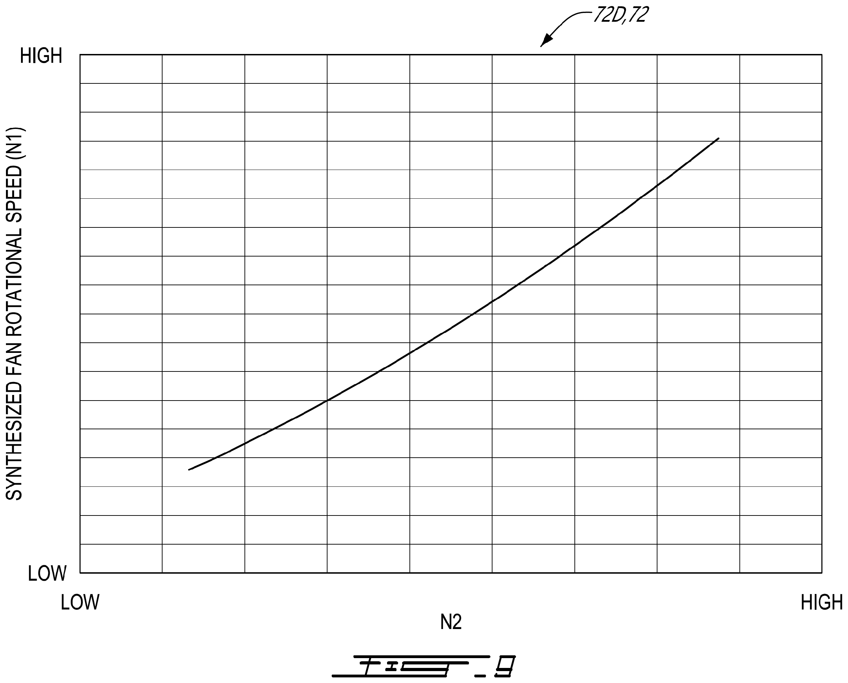

FIG. 9 is a plot graphically illustrating an exemplary relationship 72D for synthesizing a value of a rotational speed N1 (e.g., expressed in RPM) of fan 24 of engine 14 based on rotational speed N2 of HP spool 32 of engine 14. In some embodiments, exemplary relationship 72D may also consider aircraft data 62 as well. For example, rotational speed N1 of fan 24 may be expressed as N1 = f(N2, OAT, Pamb, etc.) where N2 is the rotational speed of HP spool 32, OAT is the outside air temperature included in aircraft data 62, and Pamb is the atmospheric pressure outside of aircraft 10 that is included in aircraft data 62. In some embodiments, rotational speed N1 may optionally be synthesized as a function of other data.

Another synthesized operating parameter 54 determined based on rotational speed N2 of HP spool 32 of engine 14 may include a main oil temperature (MOT) of the oil of a lubrication system of engine 14, which may be expressed as MOT = f(N2, OAT, Pamb, etc.). A further synthesized operating parameter 54 determined based on rotational speed N2 of HP spool 32 of engine 14 may include a main oil pressure (MOP) of the oil of the lubrication system of engine 14, which may be expressed as MOP = f(N2, OAT, Pamb, etc.).

In engine 114 where pressure P3 is the only measure operating parameter of engine 114 (instead of rotational speed N2) that is relied upon by EEC 46 for controlling engine 114, synthesized operating parameter(s) 54 may be determined based on pressure P3 instead of rotational speed N2. For example, rotational speed N1 of fan 24 may be expressed as N1 = f(P3, OAT, Pamb, etc.); rotational speed N2 of HP spool 32 may be expressed as N2 = f(P3, OAT, P_{AMB}, etc.); fuel flow Wf delivered to combustor 28 may be expressed as Wf = f(P3, OAT, P_{AMB}, etc.), the main oil temperature of the oil of the lubrication system of engine 114 may be expressed as MOT = f(P3, OAT, P_{AMB}, etc.); the main oil pressure of the oil of the lubrication system of engine 114 may be expressed as MOP = f(P3, OAT, P_{AMB}, etc.); the exhaust gas temperature may be expressed as EGT = f(P3, OAT, P_{AMB}, etc.); and the inter-turbine temperature may be expressed as ITT = f(P3, OAT, P_{AMB}, etc.).

The embodiments described in this document provide non-limiting examples of possible implementations of the present technology. As an alternative, some sensors of engine 14, 114 could potentially be retained and synthesized operating parameters 54 could instead be used as a backup to potentially identify faulty sensors of engine 14, 114. Upon review of the present disclosure, a person of ordinary skill in the art will recognize that changes may be made to the embodiments described herein without departing from the scope of the present technology.

## Claims

1. A gas turbine engine (14; 114) for propelling an aircraft (10), the gas turbine engine (14; 114) comprising:
an air mover (24) for propelling the aircraft (10);
a combustor (28) in which compressed air is mixed with fuel and ignited for generating a stream of combustion gas;
a first turbine (42) operable to extract energy from the combustion gas and drive the air mover (24);
a spool (36) separately rotatable from the air mover, the spool including a compressor stage (38) operable to generate the compressed air for the combustor (28) and a second turbine (34) operable to extract energy from the combustion gas and drive the compressor stage (38);
a sensor (52; 64) operable to acquire a first measured operating parameter of the gas turbine engine (14; 114), the first measured operating parameter of the gas turbine engine (14; 114) being either: a rotational speed (N2) of the spool (36); or a pressure (P3) of the compressed air between the compressor stage (38) and the combustor (28); and
an engine controller operatively connected to the sensor (52; 64), the engine controller being operable to, without using a second measured operating parameter of the gas turbine engine (14; 114) different from the first measured operating parameter of the gas turbine engine (14; 114):
determine one or more synthesized operating parameters (54) of the gas turbine engine (14; 114) based on the first measured operating parameter of the gas turbine engine (14; 114); and
control the gas turbine engine (14; 114) based on the one or more synthesized operating parameters (54) of the gas turbine engine (14; 114).

2. The gas turbine engine (14; 114) as defined in claim 1, wherein the first measured operating parameter of the gas turbine engine (14; 114) is the rotational speed (N2) of the spool.

3. The gas turbine engine (14; 114) as defined in claim 1 or 2, wherein the one or more synthesized operating parameters (54) of the gas turbine engine (14; 114) include:
a fuel flow delivered to the combustor (28); and/or
a temperature of the combustion gas downstream of the combustor (28); and/or
the pressure (P3) of the compressed air between the compressor (26) and the combustor (28).

4. The gas turbine engine (14; 114) as defined in any preceding claim, wherein:
the gas turbine engine (14; 114) is a turbofan engine (14; 114);
the air mover is a fan (24); and
the one or more synthesized operating parameters (54) of the gas turbine engine (14; 114) include a rotational speed (N1) of the fan (24).

5. The gas turbine engine (14; 114) as defined in claim 4, wherein controlling the gas turbine engine (14; 114) includes regulating a flow of bleed air extracted from a compressor (26) including the compressor stage (38) of the gas turbine engine (14; 114) based on a synthesized rotational speed (N1) of the fan (24).

6. The gas turbine engine (14; 114) as defined in claim 1, wherein the first measured operating parameter of the gas turbine engine (14; 114) is the pressure (P3) of the compressed air between the compressor stage (38) and the combustor (28), wherein, optionally, the one or more synthesized operating parameters (54) of the gas turbine engine (14; 114) include the rotational speed (N2) of the spool (36).

7. The gas turbine engine (14; 114) as defined in any preceding claim, wherein controlling the gas turbine engine (14; 114) includes controlling a fuel flow delivered to the combustor (28).

8. The gas turbine engine (14; 114) as defined in any preceding claim, wherein:
the engine controller is operatively connected to receive one or more operating parameters of the aircraft (10) acquired remotely of the gas turbine engine (14; 114); and
determining the one or more synthesized operating parameters (54) of the gas turbine engine (14; 114) is further based on the one or more operating parameters of the aircraft (10).

9. The gas turbine engine (14; 114) as defined in claim 8, wherein the one or more operating parameters of the aircraft (10) include:
an outside air temperature; and/or
an altitude of the aircraft (10); and/or
an ambient pressure surrounding the aircraft (10) at a flight level of the aircraft (10); and/or
an air speed of the aircraft (10).

10. The gas turbine engine (14; 114) as defined in any preceding claim, wherein:
the sensor (52; 64) is a first sensor; and
the gas turbine engine (14; 114) is devoid of a second sensor operable to acquire the second measured operating parameter for controlling the gas turbine engine (14; 114).

11. An unmanned aerial vehicle comprising:
a wing operable to generate lift; and
a turbofan engine (14; 114) operable to propel the unmanned aerial vehicle, the turbofan engine (14; 114) including:
in serial flow communication: a fan (24) through which ambient air is propelled; a compressor (26) operable to generate compressed air; a combustor (28) in which the compressed air is mixed with fuel and ignited to generate a stream of combustion gas; and a turbine (34) for extracting energy from the combustion gas;
a sensor (52; 64) operable to acquire one measured operating parameter of the turbofan engine (14; 114), the one measured operating parameter of the turbofan engine (14; 114) being either: a rotational speed (N2) of the compressor (26); or a pressure (P3) of the compressed air between the compressor (26) and the combustor (28); and
an engine controller operatively connected to the sensor (52; 64) and operable to, without receiving any other measured operating parameter of the turbofan engine (14; 114), control a fuel flow delivered to the combustor (28) of the turbofan engine (14; 114) based on the one measured operating parameter of the turbofan engine (14; 114).

12. The unmanned aerial vehicle as defined in claim 11, wherein the engine controller is operable to:
determine one or more synthesized operating parameters (54) of the turbofan engine (14; 114) based on the one measured operating parameter of the turbofan engine (14; 114); and
control the fuel flow delivered to the combustor (28) of the turbofan engine (14; 114) based on the one or more synthesized operating parameters (54) of the turbofan engine (14; 114).

13. A method of controlling a gas turbine engine (14; 114) of an unmanned aerial vehicle, the gas turbine engine (14; 114) including: a combustor (28) in which compressed air is mixed with fuel and ignited for generating a stream of combustion gas; a first spool (44) mechanically driving an air mover (24) for propelling the unmanned aerial vehicle, the first spool (44) including a first turbine (42) operable to extract energy from the combustion gas and drive the air mover (24); and a second spool (36) separately rotatable from the air mover (24), the second spool including a compressor (26) operable to generate the compressed air for the combustor (28) and a second turbine (34) operable to extract energy from the combustion gas and drive the compressor (26), the method comprising, at a controller of the gas turbine engine (14; 114):
receiving a sole measured operating parameter of the gas turbine engine (14; 114), the sole measured operating parameter of the gas turbine engine (14; 114) being either: a rotational speed (N2) of the second spool; or a pressure (P3) of the compressed air between the compressor (26) and the combustor (28);
determining one or more synthesized operating parameters (54) of the gas turbine engine (14; 114) based on the sole measured operating parameter of the gas turbine engine (14; 114);
generating one or more control signals (50) based on the one or more synthesized operating parameters (54) of the gas turbine engine (14; 114); and
controlling the gas turbine engine (14; 114) with the one or more control signals (50).

14. The method as defined in claim 13, wherein:
the gas turbine engine (14; 114) is a turbofan engine (14; 114); and
the sole measured operating parameter of the turbofan engine (14; 114) is the rotational speed (N2) of the second spool.

15. The method as defined in claim 14, comprising, at the controller, receiving one or more operating parameters of the unmanned aerial vehicle acquired remotely of the turbofan engine (14; 114), determining the one or more synthesized operating parameters (54) of the turbofan engine (14; 114) includes determining the one or more synthesized operating parameters (54) of the turbofan engine (14; 114) based on the one or more operating parameters of the unmanned aerial vehicle, wherein:
the one or more synthesized operating parameters (54) of the turbofan engine (14; 114) include one or more of the following: a fuel flow delivered to the combustor (28); a temperature of the combustion gas downstream of the combustor (28); and/or a rotational speed (N1) of the first spool;
the one or more synthesized operating parameters (54) include a plurality of synthesized operating parameters (54);
the one or more control signals (50) include a plurality of control signals (50); and
controlling the turbofan engine (14; 114) includes controlling the fuel flow delivered to the combustor (28) and one or more other functions of the turbofan engine (14; 114) using the plurality of control signals (50).
